# FASCICULE DE BREVET EUROPEEN

(11) **EP 3 145 744 B1**
(45) Date de publication et mention de la délivrance du brevet: **06.06.2018**
(21) Numéro de dépôt: 15720375.3
(22) Date de dépôt: 09.04.2015
(51) Int. Cl.: B60K 15/05

(54) **TRAPPE POUR L'OBTURATION DE L'ACCÈS À UNE INTERFACE D'ALIMENTATION D'UN VÉHICULE AUTOMOBILE**
ABDECKKLAPPE EINER VERSORGUNGSSCHNITTSTELLE EINES KRAFTFAHRZEUGS
INLET COVER OF A FEEDING INTERFACE OF A MOTOR VEHICLE

(30) Priorité: 23.05.2014 FR 1454693
(43) Date de publication de la demande: 29.03.2017
(73) Titulaire: Renault S.A.S., 92100 Boulogne-Billancourt (FR)
(72) Inventeur: LEFEBVRE, Benjamin, F-91470 Les Molieres (FR); JOIE, Daniel, F-78220 Viroflay (FR)
(86) Numéro de dépôt international: PCT/FR2015/050923
(87) Numéro de publication internationale: WO 2015/177421

(56) Documents cités:
- EP-A1- 1 508 465
- EP-A1- 2 127 933
- KR-A- 20040 110 344

## Description

### DOMAINE TECHNIQUE DE L'INVENTION

Le domaine technique de l'invention est celui des trappes pour l'obturation de l'accès à une interface d'alimentation d'un véhicule automobile.

L'interface d'alimentation peut être part par exemple une interface pour une alimentation en carburant et/ou une prise formant interface pour une alimentation en source électrique, et/ou une interface pour une source auxiliaire. Une telle source auxiliaire peut être par exemple un fluide tel qu'une solution à base d'urée ou encore un additif au carburant.

### ETAT DE LA TECHNIQUE ANTERIEURE

Il est connu de nombreuses trappes pour l'obturation de l'accès à une interface d'alimentation d'un véhicule automobile.

L'Homme du métier connait notamment des trappes comprenant un portillon monté mobile en pivotement avec un charnon autour d'un axe pour obturer l'accès à une interface d'alimentation logée dans une cavité. La trappe, et en particulier le portillon, est mobile en pivotement autour de cet axe entre :
- une position fermée dans laquelle la cavité est fermée ; et
- une position ouverte permettant l'accès à l'interface d'alimentation.

De telles trappes font l'objet d'un cahier des charges de raideur en surcourse à l'ouverture afin d'en assurer la robustesse à l'utilisation.

Habituellement, et pour respecter ce cahier des charges, une trappe possède une butée d'arrêt de la trappe. Dans une telle configuration :
- en position fermée, le portillon ferme la cavité en étant en appui contre son pourtour, cette position fermée correspondant à un état stable du portillon c'est-à-dire qu'il reste dans cette position s'il n'est pas sollicité extérieurement, notamment par un utilisateur, et
- en position ouverte, le portillon a pivoté par rapport à sa position fermée pour laisser libre accès à au moins une source d'alimentation, cette position ouverte correspondant à un état stable du portillon c'est-à-dire qu'il reste dans cette position s'il n'est pas sollicité extérieurement, notamment par l'utilisateur ou par un écoulement d'air tel qu'un coup de vent.

Cette butée d'arrêt est généralement située au-dessus ou au-dessous du charnon, si bien que lorsque le portillon de la trappe est sollicité, d'une part en raideur en cas de surcourse à l'ouverture, c'est-à-dire en cas de course se poursuivant au-delà de sa position ouverte, et d'autre part en endurance à l'ouverture, la trappe subit une réaction qui entraine une torsion du portillon qui sollicite la liaison pivot.

Par conséquent, et en particulier selon les architectures des trappes et des matériaux employés, certaines configurations ne respectent pas le cahier des charges.

En outre, de telles sollicitations augmentent les risques de plastification de la liaison pivot. Ces risques sont d'autant plus importants lorsque la butée d'arrêt de la trappe est déportée par rapport au charnon du fait que, une fois en appui contre ladite butée d'arrêt, la trappe peut continuer à se déformer en torsion.

Il existe également des trappes comprenant :
- d'une part, une butée d'arrêt contre laquelle le portillon vient en appui en position stable et ouverte ; et
- d'autre part, une butée d'amortissement laquelle est agencée pour amortir la vitesse de pivotement du portillon par rapport au charnon en cas de sollicitation brusque durant l'ouverture d'une part, et pour éviter un rebond du portillon lors de l'ouverture d'autre part.

Toutefois une telle butée d'amortissement ne permet pas de renforcer la trappe en cas de surcourse et de limiter les risques de plastifications.

Une telle butée d'amortissement est en outre sollicitée pour assurer une fonction d'amortissement sur tout ou partie de l'intervalle de pivotement compris entre la position fermée et la position ouverte de sorte qu'elle est active à chaque utilisation de la trappe par l'utilisateur. Une trappe selon le préambule de la revendication 1 est connue du document EP 1 508 465 A1.

### EXPOSE DE L'INVENTION

Le dispositif décrit par la suite vise à remédier à tout ou partie des inconvénients de l'état de la technique et notamment à réaliser de manière simple, économique et fiable une trappe pour l'obturation de l'accès à une interface d'alimentation d'un véhicule automobile tout en limitant les efforts reçus par la trappe en cas de surcourse du portillon.

A cet effet, l'invention a pour objet une trappe pour l'obturation de l'accès à une interface d'alimentation d'un véhicule automobile logée dans une cavité, la trappe comprenant un portillon monté mobile en pivotement avec un charnon autour d'un axe entre :
- une position fermée dans laquelle la cavité est fermée ; et
- une position ouverte permettant l'accès à l'interface d'alimentation,
la trappe comprenant une butée d'arrêt contre laquelle le portillon vient en appui en position ouverte, la trappe étant caractérisée en ce qu'elle comprend au moins une butée de surcourse contre laquelle le portillon vient en appui en cas de surcourse prédéterminée du portillon au-delà de la position ouverte.

Dans une telle configuration, le portillon vient buter contre la butée de surcourse et vient alors en appui contre elle, seulement en cas de surcourse prédéterminée dudit portillon au delà de la position ouverte.

En d'autres termes, dans le cadre d'une utilisation normale de la trappe, la butée de surcourse n'est pas sollicitée et n'est donc pas active.

Par conséquent cette butée de surcourse peut s'affranchir d'une conception trop précise et d'une architecture complexe.

Dans le cas d'une sollicitation passagère du portillon suffisamment important pour que ce dernier poursuive sa course au-delà de la position stable ouverte, la butée de surcourse peut limiter la course du portillon d'une part, et reprendre une partie des efforts exercés sur le portillon de la trappe d'autre part, renfonçant en particulier la liaison pivot entre le charnon et le portillon.

La surcourse est prédéterminée puisque en fonction d'un décalage ou jeu entre la butée d'arrêt et la butée de surcourse il est possible d'agencer la trappe pour que ladite butée de surcourse soit fonctionnelle pour une course donnée correspondant à ce jeu.

Selon une autre caractéristique particulière, la butée d'arrêt et la butée de surcourse sont situées chacune de part et d'autre du charnon par rapport à l'axe de pivotement du portillon.

Une telle caractéristique permet notamment de limiter les risques de plastification que seraient dus à une rotation trop importante autour d'un axe contenu dans un plan du portillon et perpendiculaire à l'axe de pivotement dudit portillon.

Dans une telle configuration, une telle torsion est limitée dans son amplitude et les risques de plastification sont supprimés.

Avantageusement, la butée d'arrêt comprend une agrafe en matière(s) plastique(s) formant interface de contact contre laquelle le portillon vient en appui en position ouverte.

Une telle agrafe permet en particulier de limiter le bruit environnant lors du contact entre la butée d'arrêt et le portillon. Ceci améliore également la qualité perçue par l'utilisateur du véhicule.

Par ailleurs, l'usure des pièces au niveau de leur contact est également réduite par l'utilisation d'une telle agrafe.

De préférence, une telle agrafe est placée seulement sur la butée d'arrêt. En effet, du fait qu'il existe un jeu entre la butée d'arrêt et la butée de surcourse, et en particulier que cette butée de surcourse soit fonctionnelle seulement de manière passagère en fonction de sollicitations extérieures, il n'est pas nécessaire qu'une telle agrafe soit également positionnée sur la butée de surcourse.

En d'autres termes, la qualité perçue dans une utilisation normale de la trappe n'est pas compromise et ne nécessite pas de placer nécessairement une telle agrafe sur la butée de surcourse. La conception de ladite butée de surcourse est donc simple, comme sa fabrication, ce qui constitue une solution à la fois économique et efficace.

Avantageusement encore, pour améliorer la praticité de la trappe et diminuer son encombrement, la butée d'arrêt vient en appui contre une face intérieure du portillon dans la position ouverte.

Cela permet également d'éviter une usure d'une face extérieure du portillon qui est visible de l'extérieur du véhicule et revêtue d'une peinture confondue avec celle de la carrosserie extérieure du véhicule automobile.

De même, et selon une autre caractéristique technique, la butée de surcourse vient en appui contre une face intérieure du portillon en cas de surcourse prédéterminée du portillon au-delà de la position ouverte.

### BREVE DESCRIPTION DES FIGURES

D'autres caractéristiques et avantages de l'invention ressortiront à la lecture de la description qui suit, donnée uniquement à titre d'exemple, en référence aux figures annexées, qui illustrent :
- figure 1, une vue en perspective d'une trappe pour l'obturation de l'accès à une interface d'alimentation en carburant d'un véhicule automobile selon un mode de réalisation de l'art antérieur et dans une position ouverte ;
- figures 2A et 2B, des schémas d'un portillon d'une trappe selon ce mode de réalisation dans une position ouverte et non sollicitée (figure 2A) et dans une position ouverte et sollicitée par des efforts extérieures (figure 2B) ;
- figure 3, une vue en perspective d'une trappe pour l'obturation de l'accès à une interface d'alimentation en carburant d'un véhicule automobile selon un mode de réalisation de l'invention et dans une position ouverte ;
- figures 4A et 4B, des schémas d'un portillon d'une trappe selon ce mode de réalisation de l'invention dans une position ouverte et non sollicitée (figure 4A) et dans une position ouverte et sollicitée par des efforts extérieures (figure 4B) ;
- figure 5, une vue rapprochée et en perspective de la trappe selon ce mode de réalisation au niveau de sa liaison pivot dans la position ouverte ;
- figure 6, une vue en perspective d'une butée de surcourse selon ce mode de réalisation dans la position ouverte.

Pour plus de clarté, les éléments identiques ou similaires sont repérés par des signes de référence identiques sur l'ensemble des figures.

### DESCRIPTION DETAILLEE D'UN MODE DE REALISATION

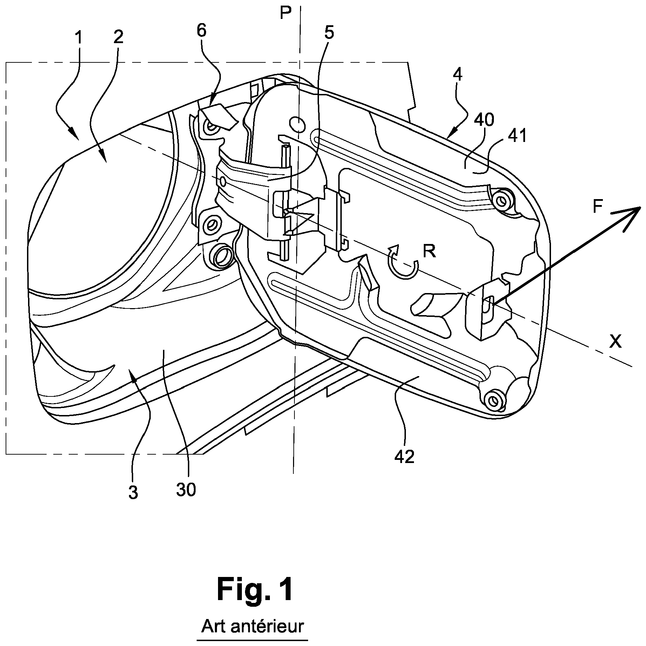

La figure 1 illustre une trappe 1 pour l'obturation de l'accès à une interface d'alimentation 2, ici en carburant, d'un véhicule automobile selon un mode de réalisation de l'art antérieur.

Sur les figures l'interface d'alimentation 2 n'étant pas détaillée, et pour améliorer leur compréhension, la référence 2 pointe la zone où l'interface d'alimentation 2 doit être localisée dans la trappe 1.

L'interface d'alimentation 2 est logée dans une cavité 3 délimitée par un bol 30. La trappe 1 comprend un portillon 4 monté mobile en pivotement avec un charnon 5 autour d'un axe P entre :
- une position fermée dans laquelle la cavité 3 est fermée ; et
- une position ouverte permettant l'accès à l'interface d'alimentation 2.

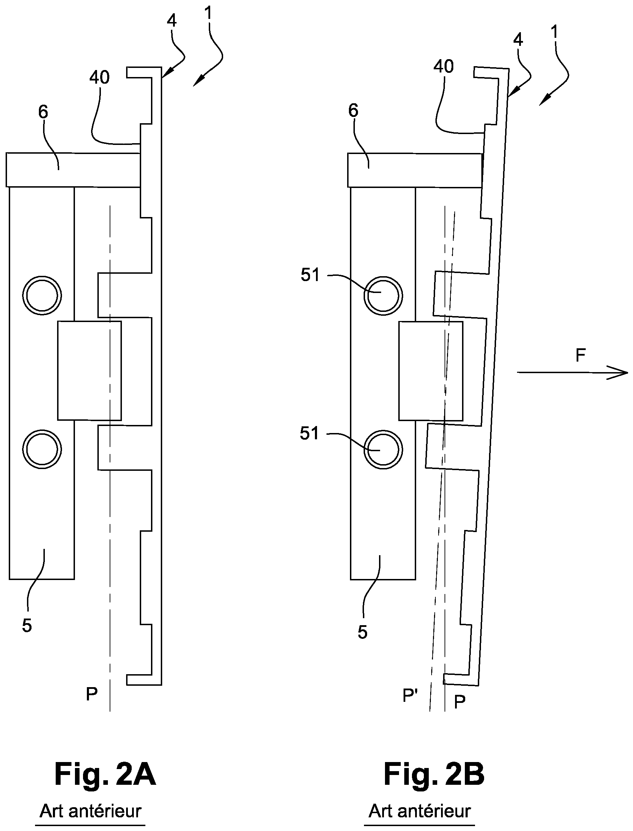

Sur cette figure 1, la trappe 1 est dans une position ouverte, c'est-à-dire que dans une cette position dite ouverte, le portillon 4 est stabilisé et un utilisateur a librement accès à l'interface d'alimentation 2. Cette position est schématisée à la figure 2A.

La trappe 1 comprend une butée d'arrêt 6 contre laquelle le portillon 4 vient en appui en position ouverte. Une telle butée permet d'arrêter le portillon 4 dans la position ouverte et de stabiliser cette position.

Cette butée d'arrêt 6 est située au-dessus verticalement par rapport à un axe parallèle à l'axe P de pivotement.

Par ailleurs, une liaison pivot entre le portillon 4 et le charnon 5 est situé sensiblement à mi-hauteur du portillon 4, c'est-à-dire qu'elle est centrée par rapport audit portillon 4.

Dans une telle configuration, lorsque la trappe 1 est sollicitée en exerçant sur le portillon 4 une force F extérieure dans la direction opposée à la résultante de la force exercée par la butée d'arrêt 6 sur le portillon 4, ledit portillon 4 poursuivra sa course au-delà de cette position ouverte et dans le prolongement de son mouvement de la position fermée à la position ouverte.

Il résultera de l'application d'une telle sollicitation extérieure que, dans une position ouverte et sollicitée :
- une partie supérieure 41 du portillon 4, située sensiblement au dessus du charnon 5 par rapport à l'axe vertical vient en contact et en appui contre la butée d'arrêt 6 ; et
- une partie inférieure 42 du portillon 4, située sensiblement dessous le charnon 5 par rapport à l'axe vertical est libre dans sa course et retenu seulement par la résistance mécanique de la liaison pivot ce qui sollicite les éléments constitutifs de la liaison pivot formant charnière C, ce qui entrainera le pivotement de l'axe de pivotement P lui-même dans une position inclinée P'. Cette position est illustrée sur la représentation schématique de la figure 2B.

Ceci entrainera une torsion R du portillon 4 autour d'un axe X contenu dans un plan du portillon 4 et perpendiculaire à l'axe de pivotement P dudit portillon 4

En l'espèce la force F est appliquée au niveau d'une gâche 43 de la trappe solidaire d'une face intérieure 40 du portillon 4, c'est-à-dire orientée du côté de la cavité 3 en position fermée de la trappe 1. Cette gâche est située à l'opposé de la liaison pivot.

Plus précisément, la gâche 43 désigne une pièce, ici métallique, percée pour recevoir le pêne d'une serrure fin de maintenir le portillon 4 en position fermée.

Le vocable « charnière » C désigne ici l'articulation mécanique formant liaison pivot composée des deux pièces que sont :
- le charnon ou charnon fixe ; et
- le portillon ou charnon mobile ;
ces deux pièces étant ajustées sur un axe ou axe de pivotement P. En pratique, et comme illustré sur les figures, la charnière C est assurée au moyen d'une tige métallique en prise sur sa longueur avec le charnon fixe et le charnon mobile.

La surcourse désigne ici une course du portillon se poursuivant au-delà de l'amplitude de sa course dite normale lors d'une utilisation délimitée par les positions ouverte et fermée.

En l'espèce le portillon 4 effectue, lorsqu'il est sollicité par la force F, une surcourse importante en particulier au niveau de sa partie inférieure 42 entrainant des risques de plastification au niveau de la charnière C.

De telles trappes 1 ne permettent pas de respecter de manière fiable certains cahiers des charges.

Par ailleurs, une telle plastification entraine la casse possible de certains éléments de la trappe 1 qui sont sollicités et notamment au niveau de la charnière C.

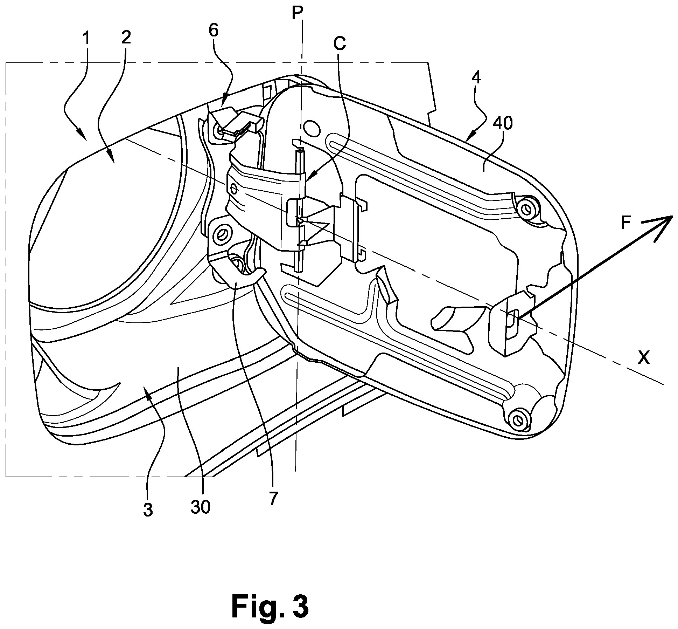

Pour résoudre tout ou partie des inconvénients précités, il est proposé, comme cela est illustré sur les figures 3, 4A, 4B, 5, 6 et 7, que la trappe comprenne en plus au moins une butée de surcourse 7 contre laquelle le portillon 4 vient en appui en cas de surcourse S prédéterminée du portillon 4 au-delà de la position ouverte.

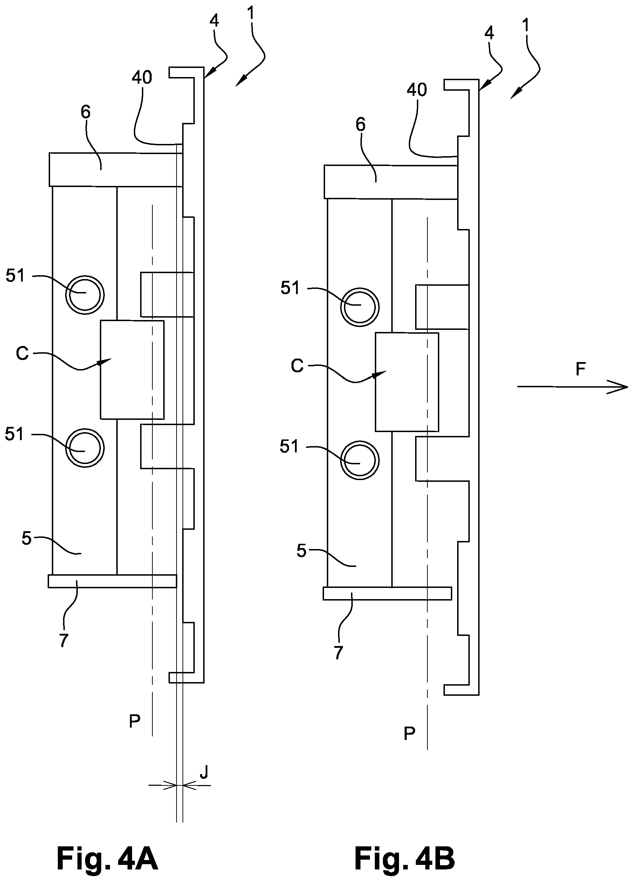

Cette surcourse est prédéterminée puisqu'elle correspond à un jeu J (voir figure 4A) qui sépare les deux surfaces d'appui des butées d'arrêt 6 et de surcourse 7 avec le portillon 4.

De cette manière, la trappe 1 est agencée pour que le portillon 4, après avoir atteint la position ouverte, vient en contact avec la butée de surcourse 7 et vient alors en appui contre elle, seulement en cas de surcourse prédéterminée dudit portillon 4 au delà de la position ouverte.

En d'autres termes, dans le cadre d'une utilisation dite normale de la trappe 1, la butée de surcourse 7 n'est pas sollicitée et n'est donc pas effective.

A l'inverse, lorsqu'une sollicitation suffisamment importante est appliquée sur le portillon 4, alors la butée de surcourse 7 peut être sollicitée. En effet, cette butée de surcourse 7 est légèrement décalée de la butée d'arrêt 6 de la trappe 1 et n'interviendra qu'en cas de surcourse afin d'équilibrer les efforts de réaction exercées sur ladite trappe 1 tout en limitant d'une part toute rotation de la trappe 1 et, d'autre part, les sollicitations en torsion de la charnière C.

Dans le cadre d'une utilisation courante, ce type de sollicitations extérieures est généralement un coup de vent exerçant une pousse contre la surface intérieure 40 du portillon 4 ou bien encore une force manuelle trop importante sur le portillon par un utilisateur.

Le vocable « sollicitations extérieures » est à opposer à des sollicitions qui seraient intrinsèques au mécanisme de fonctionnement de la trappe 1, c'est à dire liées au mécanisme de la trappe 1 elle-même. En effet, il est habituel que le portillon soit contraint par des systèmes de ressorts (non illustrés sur ces figures) de sorte que, lorsque le portillon 4 se trouve dans une position intermédiaire, à savoir dans une position située dans l'intervalle entre la position fermée et la position ouverte, ce dit portillon 4 se trouve dans un état instable et soit contraint par lesdits systèmes de ressorts pour revenir vers une position stable en fonction de sa proximité avec celle-ci. Dans ce cas les sollicitations ne sont pas considérées comme étant extérieures à la trappe 1 et de telles sollicitations ne sont généralement pas suffisantes pour déplacer le portillon 4 au delà de la position ouverte.

Dans le cas d'une sollicitation extérieure, généralement passagère présentant une force F, exercée sur le portillon 4 qui soit suffisamment importante pour que ce dernier poursuive sa course au-delà de la position stable ouverte, la butée de surcourse 7 limite l'amplitude de cette surcourse du portillon 4 d'une part, et absorbe une partie des efforts exercés sur ledit portillon 4 de la trappe 1. En d'autres termes la résistance de la charnière C est améliorée.

Afin de limiter de manière fiable toute rotation de l'axe de pivotement P qui solliciterait la charnière et augmenterait les risques de plastification, la butée d'arrêt 6 et la butée de surcourse 7 sont situées chacune de part et d'autre du charnon 5 par rapport à l'axe P de pivotement du portillon 4.

En particulier ici, la charnière est située verticalement entre la butée d'arrêt 6 et la butée de surcourse 7.

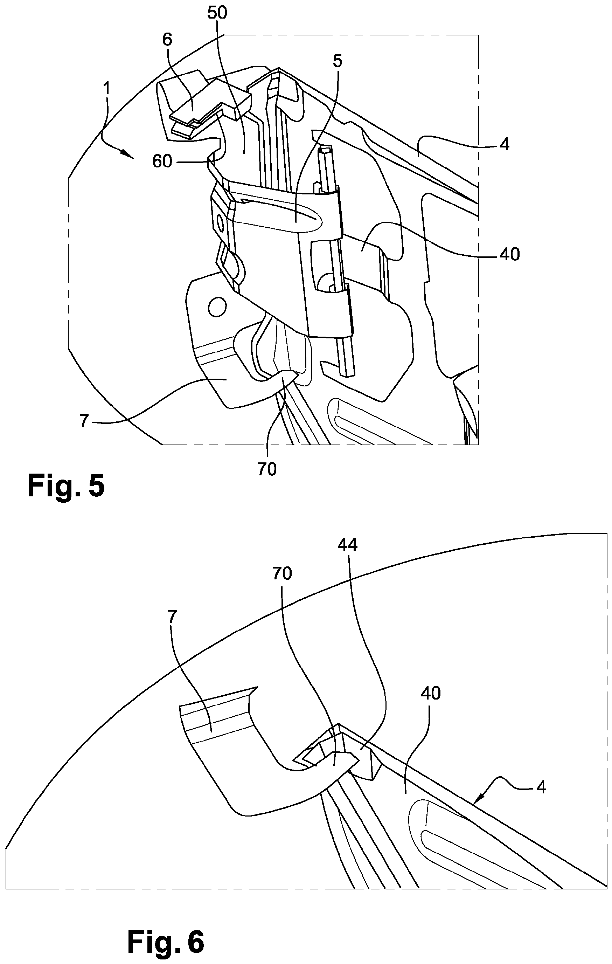

Les figures 5 et 6 illustrent des vues plus détaillées de la trappe 1 au niveau de sa charnière C formant liaison pivot et respectivement de la butée de surcourse 7 dans la position ouverte.

Le charnon 5 est une pièce métallique formée monobloc avec les butées d'arrêt 6 et de surcourse 7.

Le charnon 5 comprend une base 50 s'étendant verticalement dans une position fixée à la trappe 1. Chacune des extrémités haute et basse délimitant verticalement le corps 50 du charnon 5 comprennent des ailes repliées sensiblement à la perpendiculaire formant lesdites butées, d'une part au niveau de son extrémité haute la butée d'arrêt 6, et d'autre part au niveau de son extrémité basse la butée de surcourse 7.

Chacune des butées d'arrêt 6 et de contact 7 présentant respectivement un bec 60, 70 qui s'étant dans une direction sensiblement perpendiculaire au plan du portillon 4 en position ouverte de sorte à assurer un appui efficace.

Comme représenté sur la figure 6, la paroi intérieure 40 présente un évidemment 44 pour recevoir en appui une extrémité du bec 70 de la butée de surcourse 7 dans la position ouverte.

Le charnon 5 ou charnon fixe, est fixé au bol 30 délimitant la cavité 3 agencée pour y logée la ou les interface(s) d'alimentation 2 par l'intermédiaire de deux rivets 51.

Comme illustré par exemple sur la figure 5, la butée d'arrêt 6 comprend une agrafe 8 en matériau(x) plastique(s) formant interface de contact contre laquelle le portillon 4 vient en appui en position ouverte.

Une telle agrafe en matériau plastique permet de diminuer l'usure des pièces localement au niveau de cette butée d'arrêt 6 puisque celle-ci est fonctionnelle, c'est à dire active, à chaque utilisation. Au contraire, le caractère actif de la butée de surcourse 7 reste passager voir exceptionnel et ne nécessite pas de conception complexe ni d'y placer une agrafe en plastique.

Les deux butées, à savoir la butée d'arrêt 6 et la butée de surcourse 7 viennent toutes deux en appui contre la face intérieure 40 du portillon, l'une 6 dans la position ouverte, l'autre 7 en cas de surcourse prédéterminée du portillon 4 au-delà de la position ouverte.

Ceci permet notamment de ne pas devoir assurer des contacts entre les butées d'arrêt et/ou de surcourse 7 avec une partie plus fragile du portillon 4, par exemple sur sa surface extérieure revêtue de peinture.

De façon générale, d'autres modes de réalisation peuvent être envisagés, notamment par leurs formes.

L'invention présentant tout ou partie des caractéristiques précitées permet donc d'équilibrer les sollicitations extérieures sur la trappe 1, de limiter la mise en torsion de la trappe 1 et de limiter en sus les contraintes exercées sur la charnière C.

L'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Trappe (1) pour l'obturation de l'accès à une interface d'alimentation (2) d'un véhicule automobile logée dans une cavité (3), la trappe (1) comprenant un portillon (4) monté mobile en pivotement avec un charnon (5) autour d'un axe (P) entre :
- une position fermée dans laquelle la cavité (3) est fermée ; et
- une position ouverte permettant l'accès à l'interface d'alimentation (2),
la trappe comprenant une butée d'arrêt (6) contre laquelle le portillon (4) vient en appui en position ouverte,
la trappe (1) étant **caractérisée en ce qu'**elle comprend au moins une butée de surcourse (7) contre laquelle le portillon (4) vient en appui en cas de surcourse prédéterminée du portillon (4) au-delà de la position ouverte.

2. Trappe (1) selon la revendication 1, **caractérisée en ce que** la butée d'arrêt (6) et la butée de surcourse (7) sont situées chacune de part et d'autre du charnon (5) par rapport à l'axe (P) de pivotement du portillon (4).

3. Trappe (1) selon la revendication 1 ou 2, **caractérisée en ce que** la butée d'arrêt (6) comprend une agrafe (8) en matière(s) plastique(s) formant interface de contact contre laquelle le portillon (4) vient en appui en position ouverte.

4. Trappe (1) selon l'une quelconque des revendications précédentes, **caractérisée en ce que** la butée d'arrêt (6) vient en appui contre une face intérieure (40) du portillon (4) dans la position ouverte.

5. Trappe (1) selon l'une quelconque des revendications précédentes, **caractérisée en ce que** la butée de surcourse (7) vient en appui contre la face intérieure (40) du portillon en cas de surcourse prédéterminée du portillon (4) au-delà de la position ouverte.

## Patentansprüche

1. Klappe (1) zur Abdeckung des Zugangs zu einer Versorgungsschnittstelle (2) eines Kraftfahrzeugs, die in einem Hohlraum (3) angeordnet ist, wobei die Klappe (1) ein Türchen (4) umfasst, das mit einem Scharnierteil (5) um eine Achse (P) schwenkbeweglich zwischen:
- einer geschlossenen Position, in welcher der Hohlraum (3) verschlossen ist; und
- einer offenen Position, die den Zugang zu der Versorgungsschnittstelle (2) ermöglicht,
angebracht ist, wobei die Klappe einen Stoppanschlag (6) umfasst, an dem das Türchen (4) in der offenen Position zur Anlage kommt,
wobei die Klappe (1) **dadurch gekennzeichnet ist, dass** sie wenigstens einen Überfahranschlag (7) umfasst, an dem das Türchen (4) im Falle eines vorbestimmten Überfahrweges des Türchens (4) über die offene Position hinaus zur Anlage kommt.

2. Klappe (1) nach Anspruch 1, **dadurch gekennzeichnet, dass** der Stoppanschlag (6) und der Überfahranschlag (7) in Bezug auf die Schwenkachse (P) des Türchens (4) auf der einen bzw. anderen Seite des Scharnierteils (5) angeordnet sind.

3. Klappe (1) nach Anspruch 1 oder 2, **dadurch gekennzeichnet, dass** der Stoppanschlag (6) eine Klammer (8) aus Kunststoff(en) umfasst, die eine Kontaktschnittstelle bildet, an welcher das Türchen (4) in der offenen Position zur Anlage kommt.

4. Klappe (1) nach einem der vorhergehenden Ansprüche, **dadurch gekennzeichnet, dass** der Stoppanschlag (6) an einer Innenfläche (40) des Türchens (4) in der offenen Position zur Anlage kommt.

5. Klappe (1) nach einem der vorhergehenden Ansprüche, **dadurch gekennzeichnet, dass** der Überfahranschlag (7) im Falle eines vorbestimmten Überfahrweges des Türchens (4) über die offene Position hinaus an der Innenfläche (40) des Türchens zur Anlage kommt.

## Claims

1. Hatch (1) for closing off access to a power supply interface (2) of a motor vehicle, which interface is housed in a cavity (3), the hatch (1) comprising a flap (4) mounted with the ability to pivot with a hinge knuckle (5) about an axis (P) between:
- a closed position in which the cavity (3) is closed; and
- an open position allowing access to the power supply interface (2),
the hatch comprising an end stop (6) against which the flap (4) comes to bear in the open position,
the hatch (1) being **characterized in that** it comprises at least one overtravel end stop (7) against which the flap (4) comes to bear in the event of predetermined overtravel of the flap (4) beyond the open position.

2. Hatch (1) as claimed in Claim 1, **characterized in that** the end stop (6) and the overtravel end stop (7) are situated one on each side of the hinge knuckle (5) with respect to the axis of pivoting (P) of the flap (4).

3. Hatch (1) as claimed in claim 1 or 2, **characterized in that** the end stop (6) comprises a clip (8) made of plastic(s) forming a contact interface against which the flap (4) comes to bear in the open position.

4. Hatch (1) as claimed in any one of the preceding claims, **characterized in that** the end stop (6) comes to bear against an interior face (40) of the flap (4) in the open position.

5. Hatch (1) as claimed in any one of the preceding claims, **characterized in that** the overtravel end stop (7) comes to bear against the interior face (40) of the flap in the event of predetermined overtravel of the flap (4) beyond the open position.
